# FASCICULE DE BREVET EUROPEEN

(11) **EP 2 353 841 B1**
(45) Date de publication et mention de la délivrance du brevet: **05.08.2015**
(21) Numéro de dépôt: 10006338.7
(22) Date de dépôt: 18.06.2010
(51) Int. Cl.: B29C 49/54, B65D 1/16, B29C 49/48

(54) **Récipient pour liquide**
Flüssigkeitsbehälter
Container for liquid

(30) Priorité: 10.02.2010 FR 1000546
(43) Date de publication de la demande: 10.08.2011
(73) Titulaire: Guenuchot, Claude, 39260 Charchilla (FR)
(72) Inventeur: Guenuchot, Claude, 39260 Charchilla (FR)
(74) Mandataire: Bugnion Genève

(56) Documents cités:
- EP-A2- 0 704 379
- WO-A1-94/19242
- US-A- 3 275 726
- US-A- 3 949 034
- US-A- 5 425 454
- US-B1- 6 419 109

## Description

La présente invention concerne un récipient pour liquide.

L'invention a trait au domaine technique du stockage de liquides, qu'ils soient sous pression ou non. Dans ces conditions, l'invention trouve en particulier son application à des liquides alimentaires y compris des liquides alcoolisés.

Le récipient conforme à l'invention est susceptible de présenter des contenances très diverses.

Le récipient conforme à l'invention peut être de type jetable et recyclable ou perdu. Ce mode de réalisation est plus particulièrement intéressant dans le cas de transports de longue distance, en direction de pays où la collecte est difficile et où les frais de retour, en vue d'une éventuelle réutilisation, sont prohibitifs. Cependant, le récipient de l'invention peut permettre un conditionnement réutilisable, par le biais d'une poche-outre complémentaire, comme on le verra plus en détail dans ce qui suit.

Différents types de récipients pour liquides alimentaires sont déjà connus de l'état de la technique.

Il existe un récipient pour fluide avec pression interne, qui se compose d'un contenant de réception du fluide, d'une enveloppe extérieure, ainsi que d'une couche intercalaire réalisée en polyuréthane. Cette solution présente cependant un inconvénient, en ce qui concerne la nature des matériaux utilisés. A cet égard, l'utilisation du polyuréthane a désormais été interdite pour ce type de conditionnement alimentaire.

On connaît également, par FR-A-2 816 599, un fût pour liquide équipé de moyens de soutirage sous pression. Ce fût est constitué de deux coques réalisées par injection, qui sont soudées entre elles. Cette solution alternative implique d'autres inconvénients, en particulier liés à la tenue dans le temps de cette soudure et aux conditions d'utilisation pour des niveaux de pression interne obtenus avec certains types de liquides, comme la bière. Par ailleurs, ce fût présente un coût relativement élevé, étant donné qu'il est réalisé au terme de plusieurs opérations successives, à savoir notamment un moulage de deux demi-pièces, ainsi qu'une soudure de celles-ci.

US 3949034 divulgue un récipient pour liquide alimentaire sous pression réalisé par une opération d'extrusion-soufflage.

Enfin, FR-A-2 776 637 divulgue une enceinte à usage unique prête à l'emploi, pour un liquide avec ou sans pression interne. Cette enceinte, qui est réalisée en un matériau thermoplastique, est associée à une canne de soutirage. Bien qu'elle permette de remédier à bon nombre d'inconvénients des documents présentés ci-dessus, cette dernière solution ne se révèle pas totalement satisfaisante, notamment en ce qui concerne le procédé de fabrication qu'elle enseigne.

Ceci étant précisé, l'invention vise à remédier aux différents inconvénients de l'état de la technique, évoqués ci-dessus.

A cet effet, elle a pour objet un récipient pour liquide comprenant, en outre, au moins une jupe périphérique, respectivement supérieure et/ou inférieure, réalisée par une opération de repli de matière, la ou chaque jupe périphérique s'étendant à partir d'une zone de raccord correspondante entre le fût et respectivement le sommet et le fond du corps principal.

Selon d'autres caractéristiques de l'invention appliquées au récipient défini ci-dessus isolément ou en combinaison entre elles:
- la jupe supérieure et/ou la jupe inférieure présente(nt) une longueur supérieure à 50 mm, de préférence à 80 mm, encore de préférence à 100 mm,
- en regard d'une jupe périphérique correspondante, la paroi intérieure du corps est pourvue d'un bourrelet de renfort, faisant saillie vers l'intérieur, l'épaisseur de chaque bourrelet étant nettement supérieure à l'épaisseur du fût ainsi que du sommet ou du fond, au voisinage de ce bossage,
- le rapport entre l'épaisseur du ou de chaque bourrelet et l'épaisseur du fût ainsi que du sommet ou du fond, est supérieure à 2,
- chaque jupe est terminée par une collerette de rigidification et, de préférence, la collerette supérieure définit, avec une couronne d'extrémité, une surface de réception de la collerette inférieure d'un autre récipient,
- ce récipient comprend en outre une poche-outre de réception du liquide, de type jetable, qui est reçu dans le volume de réception du corps principal,
- ce récipient est rempli d'un liquide et, éventuellement, d'un gaz inerte.

Un autre objet est un procédé de fabrication du récipient défini ci-dessus, comprenant les étapes suivantes :
- on utilise un moule comportant deux parties mobiles présentant des parois latérales dont les formes sont conjuguées des formes définitives des parois latérales du récipient, ainsi que deux noyaux mobiles axialement ;
- on réalise une paraison de matière fondue entre les deux parties du moule;
- on introduit dans ce tube une canne de soufflage, servant au calibrage du col.
- on rapproche latéralement ces deux parties de moule, de manière à enfermer la paraison;
- on forme le corps principal par extrusion-soufflage ;
- on réalise la ou chaque jupe par une opération de retroussement, moyennant un déplacement axial de chaque noyau;
- on laisse refroidir la matière plastique ;
- on retire la canne de soufflage ;
- on évacue le récipient hors du moule ; et
- on dispose le moyen de soutirage/remplissage après ébavurage et/ou détourage éventuel(s) dudit récipient.

Selon une autre caractéristique du procédé, on forme le corps principal par extrusion soufflage d'une paraison pourvue d'au moins un bossage périphérique, faisant saillie radialement vers l'intérieur, le ou chaque bossage étant destiné à former un bourrelet correspondant du récipient.

Selon une autre caractéristique du procédé, le ou chaque bossage présente une épaisseur nettement supérieure à l'épaisseur de la paraison, le rapport entre ces épaisseurs étant supérieur à 2.

Selon encore une autre caractéristique, la course de chaque noyau mobile axialement est supérieure à 110 mm, de préférence à 170 mm, encore de préférence à 220 mm.

De préférence, on remplit le corps principal du récipient au moyen d'un liquide, après admission éventuelle d'un gaz inerte.

L'invention va être décrite ci-après, en référence aux dessins annexés, donnés uniquement à titre d'exemple non limitatif, dans lesquels :
- la figure 1A est une vue en coupe longitudinale partielle, illustrant un récipient pour liquide conforme à l'invention ;
- les figures 1B et 1C sont des vues en perspective du récipient, respectivement de dessus et de dessous ;
- les figures 2A à 7A sont des vues en plan de joint (surfaces non hachurées), des différentes étapes de fabrication du récipient de la figure 1 ;
- les figures 2B à 7B sont des vues en coupe (surfaces hachurées), selon un plan, illustrant ces mêmes étapes de fabrication ;
- la figure 8 est une vue en coupe longitudinale, à plus grande échelle, illustrant plus particulièrement un bourrelet dont est pourvu le récipient de la figure 1 ; et
- la figure 9 est une vue à plus grande échelle, illustrant un bossage dont est pourvue une paraison de matière plastique utilisée dans la fabrication de ce récipient, telle qu'illustrée aux figures 2 à 7 (A et B).
- la figure 10 est une vue en perspective avec une coupe partielle d'une variante de fût avec soupape.

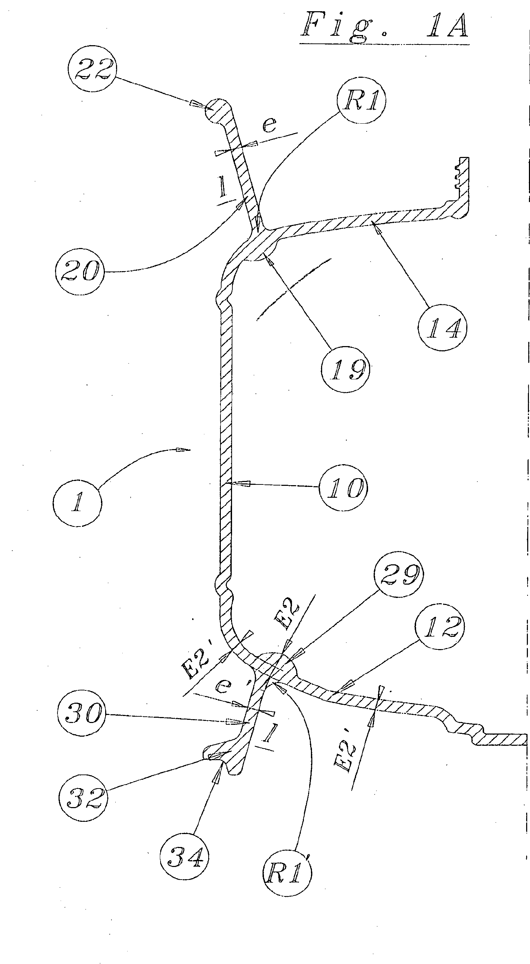

En référence à la figure 1A, le récipient conforme à l'invention, désigné dans son ensemble par la référence 1, comprend un corps 2 creux sensiblement fermé, destiné à la réception d'un liquide, éventuellement sous pression. Ce corps creux 2 se compose d'un fût cylindrique 10, auquel sont raccordés respectivement un fond fermé 12 et un sommet 14, dans lequel est ménagé un orifice muni d'un filet coopérant avec un moyen de remplissage/soutirage approprié, non représenté sur les figures, qui est de type connu en soi.

Le récipient 1, qui est réalisé d'un seul tenant, exception faite de l'organe de remplissage/soutirage, est formé d'une matière plastique, par exemple polyoléfinique, notamment mais non exclusivement du polyéthylène haute densité. Cette matière plastique est additionnée d'un pourcentage de mélange-maître de couleur et de stabilisation, par exemple d'antioxydants, d'anti-UV ou autres, également de qualité alimentaire.

A partir de la zone de raccord R₁, entre le fût 10 et le sommet 14, on retrouve une première jupe 20, dite supérieure, réalisée par une opération de repli ou de retroussement de matière, comme cela sera décrit plus en détail dans ce qui suit. Cette opération de repli de matière, de type connue en soi, est par exemple conforme à celle décrite

On note 1 la longueur de cette jupe, au niveau de sa paroi extérieure, ainsi que e son épaisseur, qui est sensiblement constante. La longueur 1 est avantageusement supérieure à 50 mm, de préférence à 80 mm, encore de préférence à 100 mm.

Au niveau de la zone de raccord R₁, à savoir en regard de la jupe 20, la paroi intérieure du corps 2 est pourvue d'un bourrelet périphérique 19, faisant saillie radialement vers l'intérieur, sur l'ensemble de pourtour du corps 2. Ce bourrelet 19 présente une épaisseur, notée E₁, qui est nettement supérieure à l'épaisseur E'₁ respectivement du fût 10 et du sommet 14, au voisinage de ce bourrelet. De façon avantageuse, le rapport E₁/E'₁ est supérieur à 2

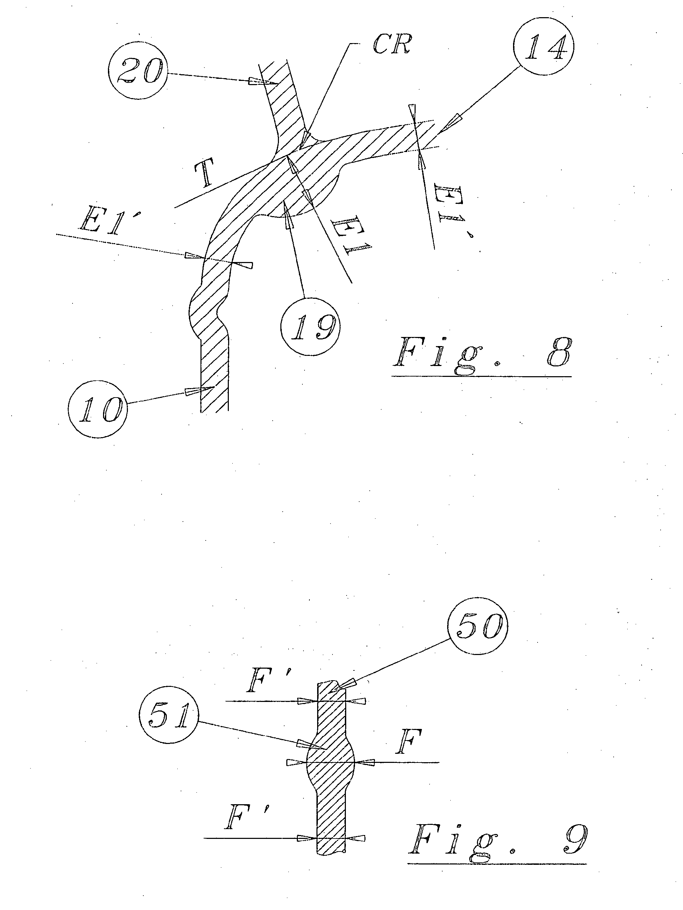

Comme le montre plus précisément la figure 8, qui est une vue à plus grande échelle du bourrelet 19, l'épaisseur E₁ est prise selon la perpendiculaire à la tangente T de la courbe de raccord CR reliant les parois extérieures du fût 10 et du sommet 14, de part et d'autre de la jupe 20. Comme on le verra plus en détail dans ce qui suit, la présence de ce bourrelet 19 permet la tenue en pression de l'ensemble du récipient.

La jupe 20 est terminée par une collerette 22, faisant saillie radialement vers l'extérieur, dont l'épaisseur est supérieure à celle e présentée ci-dessus. Cette collerette plus épaisse, est destinée à la rigidification en vue du gerbage de plusieurs récipients.

Comme on le verra dans ce qui suit, cette collerette 22, fait office de recentrage de la collerette inférieure d'un autre récipient aménagée d'un renfoncement 34 en vue de leur empilage. On notera d'ailleurs que, afin de permettre cette opération de gerbage, l'extrémité supérieure de la canne de soutirage s'étend au-dessous de la surface de réception, notée S, du récipient supérieur empilé.

A partir de la zone de raccord R'₁ entre le fût 10 et le fond 12 s'étend une seconde jupe 30, dite inférieure, dont on note 1' et e' la longueur et l'épaisseur, par analogie avec la jupe supérieure 20. De façon avantageuse, la longueur 1' est supérieure à 50 mm, de préférence supérieure à 80 mm et encore de préférence supérieure à 100 mm. La longueur 1' peut être égale à celle 1 de la jupe supérieure 20, mais peut également être supérieure ou inférieure à cette dernière.

De façon analogue à ce qui a été décrit ci-dessus, au niveau de la zone de raccord R'₁, à savoir en regard de la jupe inférieure 30, la paroi intérieure du corps 2 est pourvue d'un autre bourrelet 29, faisant saillie radialement vers l'intérieur. Comme dans le cas du premier bourrelet 19, ce bourrelet inférieur 29 présente une épaisseur E₂ qui est nettement supérieure à l'épaisseur E'₂ du fût 10 et du fond 12, de part et d'autre de ce bourrelet. De façon avantageuse, le rapport E₂/E'₂ est supérieur à 2

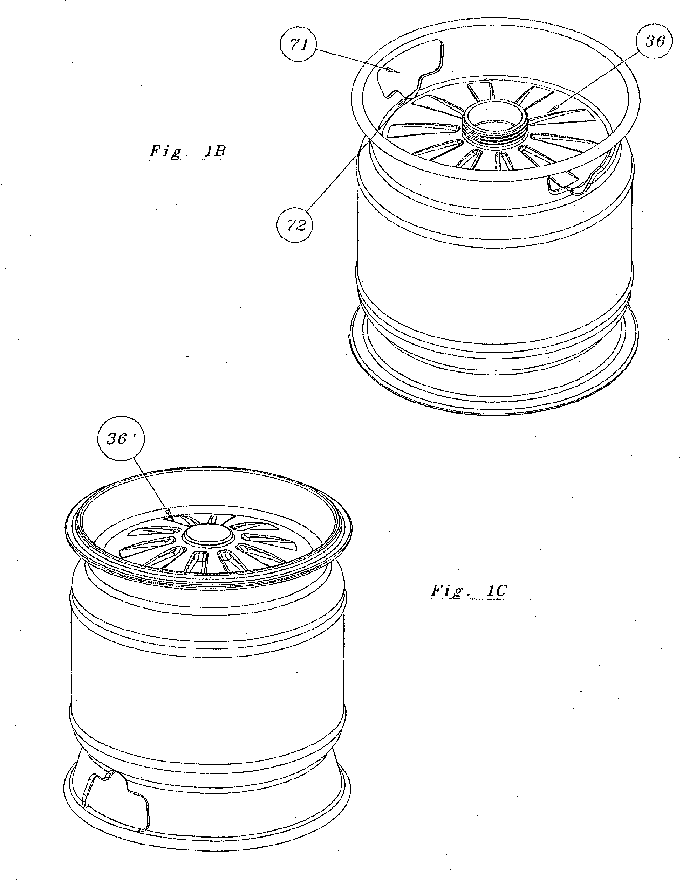

La jupe inférieure 30 se termine par une collerette 32, de plus grande épaisseur, dont le bord extérieur est creusé d'un renfoncement 34, propre à coopérer avec la collerette 22 d'un autre récipient non représenté, destiné à être placé au-dessous de celui de la figure 1, en vue de leur gerbage mutuel. Enfin, on notera que le sommet 14 et le fond 12 sont pourvus de nervures de rigidification , 36 représentées sur la figure 1B Ces nervures prennent leur origine au voisinage d'un bourrelet périphérique 19 ou 29 correspondant.

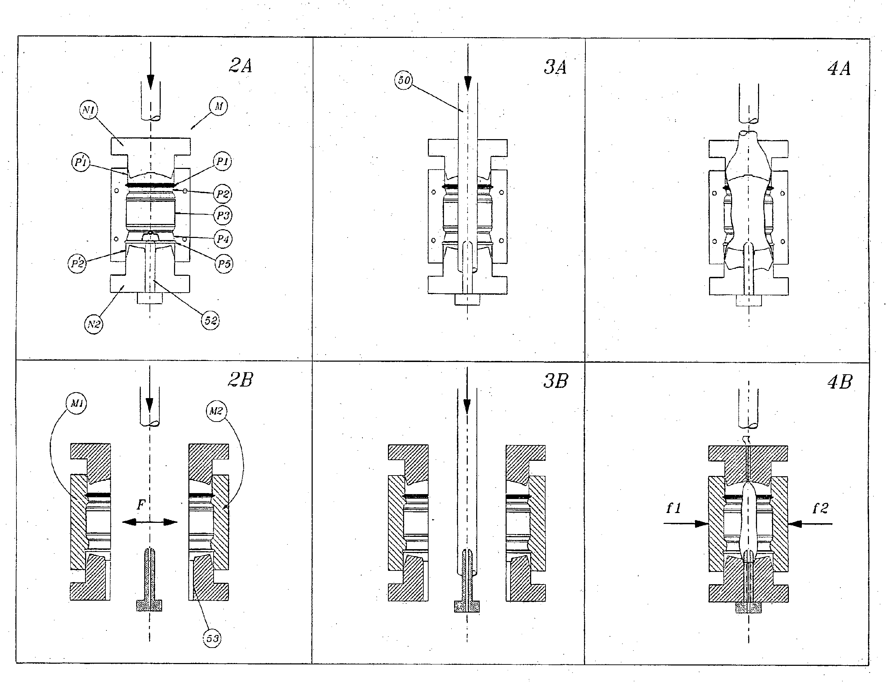

La fabrication du récipient décrit ci-dessus, en référence à la figure 1, va maintenant être explicitée dans ce qui suit, en référence aux figures 2 à 7. Dans ces différentes figures, celles qui sont suivies de la lettre A correspondent à des vues en plan de joint du moule, alors que celles suivies de la lettre B correspondent à la vue en coupe.

Comme le montrent notamment les figures 2A et 2B, on utilise un moule M comprenant deux parties de moule M₁ et M₂, mobiles latéralement selon la double flèche F, ainsi que deux noyaux N₁ et N₂ mobiles axialement. A cet égard, on notera que la figure 2A représente plus particulièrement l'intérieur de la partie de moule M₁.

Chaque partie de moule M₁ et M₂ comporte des parois intérieures, notées P₁ à P₅, présentant des formes qui sont conjuguées des formes extérieures définitives du fût 10, ces jupes 20 et 30, ainsi que des collerettes 22 et 32. Par ailleurs, les noyaux N₁ et N₂ possédant, à leurs extrémités libres, des parois périphériques P'₁ et P'₂, qui présentent des formes conjuguées des formes intérieures des jupes 20 et 30, ainsi que des collerettes 22 et 32.

Il s'agit tout d'abord, de manière classique, de former entre les parties de moule M₁ et M₂ une paraison 50, à savoir un tube extrudé de matière fondue. On notera que les paramètres d'extrusion de cette paraison sont tels qu'ils lui confèrent une répartition homogène d'épaisseur de parois, à la fois dans la longueur de la paraison et dans la circonférence du tube. A cet effet, on utilise avantageusement une tête d'extrusion.

Comme le montre plus particulièrement la figure 9, la paraison 50 ne présente pas une épaisseur uniforme. En effet, cette paraison est pourvue de deux bossages périphériques, respectivement 51 et 61, qui sont destinés à former les bourrelets 19 et 29 du récipient définitif. L'épaisseur, notée F sur la figure 9, de chaque bossage 51 et 61 correspond sensiblement à l'épaisseur définitive E₁ et E₂ de chaque bossage 19 et 29 Cette épaisseur de bossage est nettement supérieure à l'épaisseur F' des zones de cette paraison, qui sont immédiatement adjacentes à chacun de ces bossages. Sur la figure 8, seul le bossage 51 est représenté, étant entendu que celui 61 est analogue.

De plus, l'extrémité inférieure du tube extrudé englobe une canne de soufflage 52, qui pénètre dans un orifice central 53 du noyau N₂. Cette canne 52 est montée, sur un support 56 qui permet, de façon connue en soi, son déplacement axial.

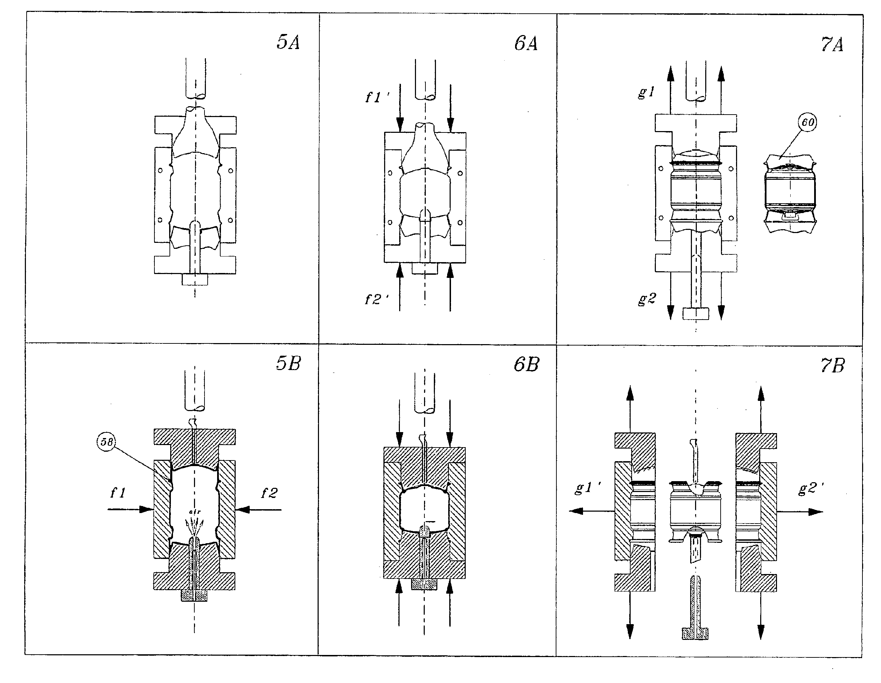

Comme le montre notamment la figure 5B, on referme ensuite les parties de moule M₁ et M₂, selon des flèches f₁ et f₂. Ceci permet de préformer la paraison 50, selon la géométrie finale du récipient. On notera que les formes intérieures du moule sont aménagées, en périmètre de la base et du sommet, de manière à refouler une quantité de matière encore à l'état visqueux dans des volumes, situés entre les parois en regard P₁ et P'₁, ainsi que P₅ et P'₂.

Puis, comme illustré en figure 6A, on souffle de l'air sous pression au travers de la canne 52, ce qui permet de plaquer le tube extrudé 58 contre les parois P₁ à P₅. De cette façon, ce tube extrudé 58 présente sensiblement la géométrie finale du récipient de la figure 1. Les noyaux N₁ et N₂ sont en outre déplacés axialement l'un vers l'autre, selon les flèches f'₁ et f' ₂ .

Ceci permet de compacter, par une opération, de retroussement de matière de type connu en soi, la matière encore malléable dans les volumes précités, définis par les parois en regard P₁ et P' ₁, ainsi que P₅ et P'₂. Ceci conduit à la formation des jupes 20 et 30, ainsi que des collerettes 22 et 32, selon leur géométrie définitive. On notera que la valeur de course des noyaux N₁ et N₂ est liée aux longueurs 1 et 1' des jupes 20 et 30. Dans ces conditions, la valeur de cette course est avantageusement supérieure à 110 mm, de préférence à 170 mm, encore de préférence à 220 mm.

Puis, comme illustré aux figures 5A et 5B, on a maintient les deux parties de moule M₁ et M₂ verrouillées, pendant le temps de refroidissement de la matière. De plus, on retire la canne de soufflage 52, lorsque la matière est solidifiée au moins au droit de cette canne.

Ensuite, comme illustré aux figures 6A et 6B, on déplace les noyaux N₁ et N₂ axialement, à l'opposé l'un de l'autre, selon les flèches G₁ et G₂. On déplace également les deux parties de moule M₁ et M₂ à l'opposé l'une de l'autre, selon les flèches G'₁ et G'₂. Le moule se trouve alors ouvert, de sorte que le récipient 1 est évacué de l'appareillage (figures 7A et 7B). On enlève alors les surplus de matières, notamment les chutes 60, au moyen d'opérations classiques de détourage et d'ébavurage.

Le récipient 1 ainsi réalisé est ensuite acheminé vers un autre poste de fabrication, non représenté. Dans celui-ci, il est possible de réaliser deux types d'opérations, selon la destination que l'on désire conférer au récipient conforme à l'invention.

Ainsi, si ce récipient est destiné à un usage unique, à savoir qu'il est de type jetable, on lui associe une canne de soutirage de type connu en soi.

En revanche, si le récipient de l'invention est destiné à être réutilisable, on lui associe une poche-outre, de type connu en soi, qui est par exemple conforme à celle commercialisée par la société Bernhart. Cette poche-outre, de type souple, est introduite par tout moyen approprié dans le volume intérieur du récipient. Dans ce cas, la canne de soutirage est intégrée, au moins partiellement, à la poche-outre précitée.

Selon une variante non représentée, il est possible de réaliser un inertage par pressurisation de gaz, de type connu en soi, dans le volume intérieur du récipient. Cette opération, de type connu en soi, intervient à ce stade pour faciliter l'enfûtage ultérieur du liquide gazéifié chez le brasseur.

Dans l'exemple décrit et représenté, le récipient est pourvu de deux jupes, respectivement supérieure et inférieure. A titre de variante non représentée, ce récipient peut comporter une unique jupe, prévue en partie basse. Dans ces conditions, ce récipient n'est pas adapté de façon simple aux opérations de gerbage.

Dans l'exemple décrit et représenté, le fût présente une section transversale sensiblement circulaire. Selon une variante non représentée, cette section transversale peut être de forme différente, notamment polygonale, telle que carrée, hexagonale ou octogonale. Ceci permet de disposer côte à côte les récipients adjacents, sans induire de pertes substantielles de place.

Dans l'exemple décrit et représenté, le récipient est équipé de deux bourrelets périphériques, assurant une fonction de renfort à l'égard de la tenue en pression. Dans le cas où le récipient n'est pas destiné à contenir un liquide sous pression, ce récipient peut ne pas être pourvu de tels bourrelets. Par ailleurs, dans le cas où le récipient est propre à contenir du liquide sous pression, tout en ne comprenant qu'une unique jupe, il est alors prévu un unique bourrelet périphérique, prévu en regard de cette jupe.

L'invention permet d'atteindre les objectifs précédemment mentionnés.

Le récipient conforme à l'invention est conçu de manière écologique. En effet, sa valorisation en fin de vie est susceptible d'être facilitée, dès lors qu'il est constitué d'une enveloppe soufflée en matière thermoplastique recyclable, le moyen de remplissage/soutirage pouvant par ailleurs être enlevé par simple opération de détourage, puis valorisé par ailleurs.

Le récipient conforme à l'invention présente une économie substantielle de poids par rapport à ses concurrents métalliques. Ceci réduit les efforts physiques nécessaires à sa manipulation.

Le récipient conforme à l'invention comporte au moins une jupe périphérique, réalisée avantageusement de manière directe durant l'opération de fabrication du corps par extrusion-soufflage. Le dimensionnement de chaque jupe assure une liaison mâle/femelle sur l'intégralité de son périmètre, de manière à pouvoir, le cas échéant, gerber facilement les récipients les uns sur les autres, jusqu'à quatre rangées, tout en assurant également la rigidité nécessaire pour la résistance au choc, en cas de chute.

Par ailleurs, dans l'éventualité où une jupe supérieure est présente, cette dernière dépasse avantageusement la hauteur maximale hors tout du moyen de remplissage/soutirage, ce qui permet de protéger ce dernier. Cette jupe supérieure incorpore par ailleurs des ouvertures 71, servant de poignées afin de faciliter la manipulation globale du récipient et des trous d'évacuation 72 d'eau de nettoyage ou de produits quelconques.

A cet égard, on notera que l'utilisation de la technique de repli de matière, intervenant dans la fabrication du récipient de l'invention, est avantageuse par rapport à l'enseignement de FR-A-2 776 637. En effet, ce repli de matière permet de créer chaque jupe durant l'opération d'extrusion-soufflage proprement dite, sous l'effet du mouvement des noyaux mobiles du moule.

Par ailleurs, la présence de chaque bourrelet interne, associé à une jupe correspondante, est particulièrement avantageuse en vue de la tenue à la pression interne du récipient. En effet, chaque bourrelet évite toute rupture, même partielle, du récipient au niveau de la zone de raccord entre la jupe et le corps, qui constitue une région particulièrement soumise aux contraintes dues à la pression interne du liquide

On notera également que l'invention permet de réaliser, de manière commode, des récipients propres à recevoir des liquides sous pression, ainsi que d'autres récipients qui ne sont pas réservés à une telle utilisation. Ainsi, les bossages 51 et 61 de la paraison 50 peuvent être réalisés ou pas, en fonction de la destination qu'on désire conférer aux récipients. Par ailleurs, il est particulièrement commode de passer d'une paraison dépourvue de ces bossages, à une autre paraison qui en est équipée.

Enfin, le récipient conforme à l'invention présente des performances en adéquation avec les paramètres requis, notamment en termes de :
- résistance à la pression interne (en particulier jusqu'à 6 bars en continu) ;
- résistance à la déformation induite par l'appareil d'enfûtage, en particulier résistance à la compression verticale ;
- résistance aux chocs chute libre (aucune fuite observée en cas de chute d'une hauteur jusqu'à 2 mètres d'un fût rempli et sous pression interne de 6 bars).

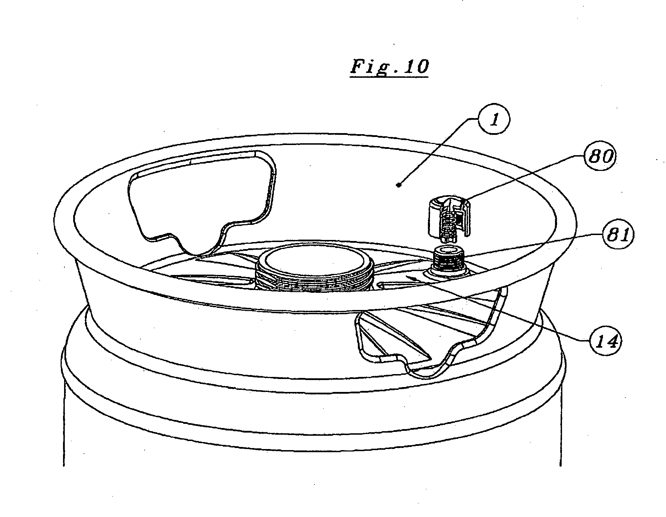

La figure 10 représente une variante du fût de l'invention dans laquelle il est équipé d'une valve de sécurité ou soupape 80.

A cet effet, la paroi supérieure du fût comporte une cheminée 81 moulée d'une seule pièce avec le fût et sans nécessiter de changement de la cinématique du moule.

La cheminée 81 présente un alésage intérieur assurant la communication entre l'extérieur et le volume intérieur du fût. La cheminée 81 est pourvue sur sa paroi extérieure d'un filetage destiné à recevoir par vissage le taraudage d'une jupe solidaire d'un capot renfermant la valve 80 à ressort.

Le ressort est taré de façon à limiter la pression régnant dans le fût à une valeur déterminée, par exemple, de l'ordre de 4 bars, au-delà de laquelle le clapet de la valve s'ouvre en laissant s'échapper le gaz sous pression.

## Revendications

1. Récipient pour liquide alimentaire sous pression comprenant ;
- un corps principal (2) réalisé par une opération d'extrusion-souflage qui définit un volume de réception de ce liquide, ledit corps comprenant un fût (10) prolongé respectivement par un fond (12) ainsi que par un sommet (14) dans lequel est ménagé un orifice de réception d'un moyen de soutirage/remplissage,
- au moins une jupe périphérique, respectivement, supérieure (20) et/ou inférieure (30) réalisée par une opération de repli de matière; ladite jupe périphérique s'étendant à partir d'une zone de raccord correspondante (R₁, R'₁) entre le fût (10) et respectivement le sommet (14) et le fond (12) du corps principal, **caractérisé en ce que** le récipient comprend une poche-outre de réception du liquide qui est reçue dans le volume intérieur du corps principal (2) et **en ce que**, en regard d'une jupe périphérique correspondante (20, 30), la paroi intérieure dudit corps est pourvue d'un bourrelet de renfort (19,29) faisant saillie vers l'intérieur, l'épaisseur (E₁, E₂) de chaque bourrelet étant supérieure à l'épaisseur de la paroi du fût (10) ainsi qu'à celle du sommet (14) ou du fond (12) au voisinage dudit bourrelet.

2. Récipient selon la revendication 1, **caractérisé en ce que** la jupe supérieure (20) et/ou la jupe inférieure (30) présente une longueur (l, l') supérieure à 50 mm et, de préférence supérieure à 100 mm.

3. Récipient selon l'une des revendications précédentes, **caractérisé en ce que** le rapport entre l'épaisseur du ou de chaque bourrelet (19, 29) et l'épaissseur du fût (10) ainsi que du sommet (14) ou du fond (12) est supérieure à 2.

4. Récipient selon l'une des revendications précédentes, **caractérisé en ce que** chaque jupe (20, 30) est terminée par une collerette de rigidification (22, 32).

5. Récipient selon la revendication 4, **caractérisé en ce que** ladite collerette supérieure de rigidification (22) définit une surface (S) de réception de la collerette inférieure (32) d'un autre récipient.

## Patentansprüche

1. Behälter (1) für Lebensmittelflüssigkeit unter Druck, umfassend:
- einen Hauptkörper (2), hergestellt durch ein Extrusions-Blasformverfahren, der ein Empfangsvolumen dieser Flüssigkeit definiert, wobei der Körper einen Schaft (10) umfasst, der jeweils durch einen Boden (12) sowie eine Spitze (14) verlängert ist, in die eine Empfangsöffnung eines Entnahme-/Befüllmittels eingearbeitet ist
- mindestens eine jeweils obere (20) und/oder untere (30) periphere Schürze, die durch einen Materialfaltvorgang hergestellt ist, wobei sich die periphere Schürze ab einer entsprechenden Verbindungszone (R₁, R'₁) zwischen dem Schaft (10) und jeweils der Spitze (14) und dem Boden (12) des Hauptkörpers (2) erstreckt, **dadurch gekennzeichnet, dass** der Behälter eine Flüssigkeitsaufnahme-Bag-In-Box umfasst, die im Innenvolumen des Hauptkörpers (2) aufgenommen ist und dass, gegenüber einer entsprechenden peripheren Schürze (20, 30), die Innenwand des Körpers mit einer Verstärkungswulst (19, 29) versehen ist, die nach innen absteht, wobei die Dicke (E₁, E₂) jeder Wulst größer als die Dicke der Wand des Schafts (10) sowie der der Spitze (14) oder des Bodens (12) in der Nähe der Wulst ist.

2. Behälter nach Anspruch 1, **dadurch gekennzeichnet, dass** die obere Schürze (20) und/oder die untere Schürze (30) eine Länge (l, l') über 50 mm und vorzugsweise über 100 mm aufweist/aufweisen.

3. Behälter nach einem der vorangehenden Ansprüche, **dadurch gekennzeichnet, dass** das Verhältnis zwischen der Dicke der oder jeder Wulst (19, 29) und der Dicke des Schafts (10) sowie der Spitze (14) oder des Bodens (12) größer als 2 ist.

4. Behälter nach einem der vorangehenden Ansprüche, **dadurch gekennzeichnet, dass** jede Schürze (20, 30) durch einen Versteifungsrand (22, 32) abgeschlossen ist.

5. Behälter nach Anspruch 4, **dadurch gekennzeichnet, dass** der obere Versteifungsrand (22) eine Empfangsfläche (S) des unteren Rands (32) eines anderen Behälters definiert.

## Claims

1. A pressurized container for food liquid, comprising:
- a main body (2) formed by extrusion blow moulding which defines a volume to receive this liquid, the said body comprising a cask (10) respectively extended by a bottom (12) and by a top (14) in which there is arranged an orifice to receive extracting/filling means;
- at least one respectively upper (20) and/or lower (30) peripheral skirt formed by folding of material; the said peripheral skirt extending from a corresponding joining area (R₁, R'₁) between the cask (10) and the top (14) and bottom (12) respectively of the main body, **characterized in that** the container comprises a bladder to receive the liquid received inside the inner volume of the main body (2), and **in that** opposite a corresponding peripheral skirt (20, 30) the inner wall of the said body is provided with a reinforcing bead (19, 29) projecting inwardly, the thickness (E₁, E₂) of each bead being thicker than the thickness of the wall of the cask (10) and thicker than the thickness of the top (14) or bottom (12) in the vicinity of the said bead.

2. The container according to claim 1, **characterized in that** the upper skirt (20) and/or lower skirt (30) has a width (l, l') larger than 50 mm and preferably larger than 100 mm.

3. The container according to one of the preceding claims **characterized in that** the ratio between the thickness of the bead(s) (19, 29) and the thickness of the cask (10) and the top (14) or bottom (12) is greater than 2.

4. The container according to one of the preceding claims, **characterized in that** each skirt (20, 30) ends in a rigidifying collar (22, 32).

5. The container according to claim 4, **characterized in that** the said upper rigidifying collar (22) defines a surface (S) to receive the lower collar (32) of another container.
